# EUROPÄISCHE PATENTSCHRIFT

(11) **EP 1 496 164 B1**
(45) Veröffentlichungstag und Bekanntmachung des Hinweises auf die Patenterteilung: **14.12.2005**
(21) Anmeldenummer: 03023338.1
(22) Anmeldetag: 15.10.2003
(51) Int. Cl.: E03C 1/04

(54) **Formschlüssige Verbindung des Anschlussstücks einer Rohrleitung**
Positive connection of the fitting of a conduit
Raccordement du raccord d'un conduit par correspondance de forme

(30) Priorität: 08.07.2003 DE 10330685
(43) Veröffentlichungstag der Anmeldung: 12.01.2005
(73) Patentinhaber: Kludi GmbH & Co. KG, 58706 Menden (DE)
(72) Erfinder: Fenner, Robert, 59846 Sundern (DE)
(74) Vertreter: COHAUSZ DAWIDOWICZ HANNIG & SOZIEN

(56) Entgegenhaltungen:
- EP-A- 1 022 500
- WO-A-97/17501
- DE-A- 3 119 313
- US-A- 4 667 987
- US-A- 5 294 156
- US-A- 5 558 128

## Beschreibung

Die Erfindung betrifft eine formschlüssige Verbindung des Anschlussstücks einer Rohr- oder Schlauchleitung für Fluide, insbesondere einer Frischwasserzuleitung einer Sanitärmischarmatur. Eine solche formschlüssige Verbindung ist beispielsweise in der DE 31 19 313 A gezeigt.

Zur Verbindung des Anschlussstücks einer Rohr- oder Schlauchleitung für Fluide, insbesondere einer Frischwasserzuleitung einer Sanitärmischarmatur, ist es üblich, das Anschlussstück einer solchen Rohr- oder Schlauchleitung mit einem Außengewinde zu versehen und das Anschlussstück in ein entsprechendes Innengewinde einzuschrauben. Zur Abdichtung wird üblicherweise eine O-Ring-Dichtung vorgesehen, welche hinter dem Außengewinde auf einem Absatz des Anschlussstückes der Rohr- oder Schlauchleitung anliegt. Nachteilig hierbei ist, dass erstens die O-Ring-Dichtung bis zu ihrem Sitz über das Gewinde geschoben werden muss und dabei beschädigt werden kann, dass zweitens die O-Ring-Dichtung in einem aufwendigen Montagevorgang über mehrere Gewindezüge hinweg zu ihrer Position zu führen ist und dass drittens die Rohr- oder Schlauchleitung mitsamt dem Anschlussstück in das entsprechend vorgesehene Innengewinde eingeschraubt werden muss.

Aufgabe der Erfindung ist es, eine formschlüssige Verbindung des Anschlussstücks einer Rohr- oder Schlauchleitung für Fluide, insbesondere einer Frischwasserzuleitung einer Sanitärmischarmatur zu schaffen, die es ermöglicht, den Montagevorgang sowohl hinsichtlich des Einbringens einer Dichtung, als auch hinsichtlich der Montage der gesamten Verbindung zu vereinfachen.

Diese Aufgabe wird erfindungsgemäß durch die Merkmale nach Anspruch 1 gelöst.

Die Vorteile der erfindungsgemäßen formschlüssigen Verbindung sind die einfache und schnelle Montage, da lediglich ein seitliches Einschieben des anzuschließenden Endstückes der Rohr- oder Schlauchleitung und ein Einlegen in eine Ausnehmung erforderlich ist. Weitere Vorteile sind ein sicherer Halt sowie eine gute Abdichtung der erfindungsgemäßen Verbindung.

Die erfindungsgemäßen Verbindungsteile sind gegenüber Verbindungsteilen nach dem bekannten Stand der Technik einfacher und preiswerter herzustellen, da insbesondere die Fertigung eines Gewindes und eines Sechskantes zum Einschrauben entfällt.

Vorteilhafte Ausgestaltungen der Erfindung sind in den Unteransprüchen aufgeführt.

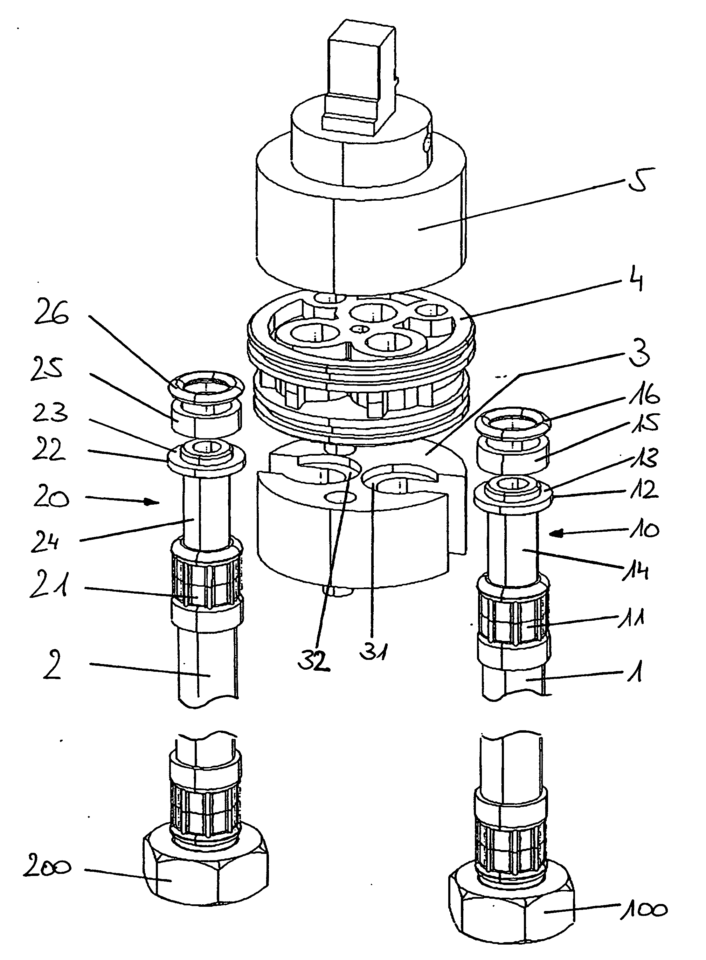

Eine bevorzugte Ausführungsform der erfindungsgemäßen Verbindung ist in der Zeichnung dargestellt und wird im folgenden näher beschrieben.

Die Zeichnung zeigt die Explosionsdarstellung einer erfindungsgemäßen Verbindung des Anschlussstücks einer Rohrleitung für Fluide.

Die Zeichnung zeigt die Frischwasserzuleitungen 1, 2 für Warm- und Kaltwasser zum Anschluss an eine Sanitärmischarmatur. Die Frischwasserzuleitungen 1, 2 verfügen an ihrem unteren Ende über bekannte Anschlusselemente 100, 200 zur Verbindung mit Frischwasserleitungen. An ihrem oberen Ende, welches an die Sanitärmischarmatur anzuschließen ist, verfügen die Rohr- oder Schlauchleitungen 1, 2 über Anschlussstücke 10, 20, die mittels bekannter Pressverbindungen 11, 21 mit den Rohr- oder Schlauchleitungen 1, 2 verbunden ist.

Das obere Anschlussstück 10, 20 weist an seinem anzuschließenden Ende einen nach außen erweiterten Abschnitt 12, 22 auf. Der nach außen erweiterte Abschnitt 12, 22 des Anschlussstücks 10, 20 der Rohr- oder Schlauchleitung 1, 2 ist in dem dargestellten Ausführungsbeispiel ringförmig ausgebildet. Nach der Montage der erfindungsgemäßen Verbindung liegt der nach außen erweiterte Abschnitt 12, 22 des Anschlussstücks 10, 20 der Rohr- oder Schlauchleitung 1, 2 in der Ausnehmung 31, 32 eines Anschlussadapters 3 ein, wobei die Ausnehmung 31, 32 den erweiterten Abschnitt 12, 22 des Anschlussstücks 10, 20 untergreift.
Der Anschlussadapter 3 kann einstückig als entsprechende Anschlussplatte zur Aufnahme der Anschlussstücke 10, 20 oder auch mehrteilig ausgeführt sein.

Bei dem in der Zeichnung dargestellten Ausführungsbeispiel der erfindungsgemäßen Verbindung bildet die Oberseite des nach außen erweiterten Abschnitts 12, 22 des Anschlussstücks der Rohr- oder Schlauchleitung 1, 2 eine ringförmige Stufe 13, 23, die als Anlageschulter für einen Dichtring 15, 25 oder alternativ für eine O-Ring-Dichtung 16, 26 dient. Nach dem Zusammenbau wird diese O-Ring-Dichtung 16, 26 von der Unterseite der Verbindungsplatte 4 dichtend verpresst, wobei die Verbindungsplatte 4 im dargestellten Ausführungsbeispiel der Verbindung zu einer Mischkartusche 5 dient.

Das Anschlussstück 10, 20 weist unterhalb des erweiterten Abschnitts 12, 22 einen geringeren Durchmesser auf als die darunter liegende Rohr- oder Schlauchleitung 1, 2 bzw. als die Klemmverbindung 11, 21, so dass zwischen der Rohr- oder Schlauchleitung 1, 2 bzw. der Pressverbindung 11, 21 und dem nach außen erweiterten Abschnitt 12, 22 des Anschlussstücks 10, 20 eine Einschnürung 14, 24 besteht. Der eingeschnürte Bereich 14, 24 des Anschlussstücks 10, 20 durchragt im montierten Zustand eine Bohrung des Anschlussadapters 3, wobei die Bohrung des Anschlussadapters 3 im dargestellten Ausführungsbeispiel zu einer maulförmigen Aufnahme ausgebildet ist, wobei die Breite der maulförmigen Aufnahme dem Durchmesser der Bohrung entspricht, die den eingeschnürten Bereich 14, 24 des Anschlussstücks 10, 20 aufnimmt.

Dadurch dass die maulförmige Aufnahme der Anschlussplatte 3 lediglich eine Breite entsprechend dem Durchmesser der Bohrung aufweist, bildet die Ausnehmung 31, 32 der Anschlussplatte 3 eine Anlageschulter, in der der nach außen erweiterte Abschnitt 12, 22 des Anschlussstücks 10, 20 formschlüssig einliegt und die Anlageschulter des Anschlussadapters 3 einen Umfangsbereich des Anschlussstücks 10, 20 und der Rohr- oder Schlauchleitung 1, 2 von mehr als 180 Grad umfasst. Dadurch ist die erfindungsgemäße Verbindung gegen ein seitliches Herausrutschen gesichert.

Alternativ zum dargestellten Ausführungsbeispiel der erfindungsgemäßen Verbindung kann der erweiterte Abschnitt 12, 22 des Anschlussstücks 10, 20 eine beliebige Form aufweisen, also beispielsweise sechs- oder achteckförmig ausgebildet sein und in einer entsprechend ausgeformten Ausnehmung einliegen.

Die Montage erfolgt durch ein seitliches Einschieben des anzuschließenden Anschlussstückes 10, 20 der Rohr- oder Schlauchleitung 1, 2 in die maulförmige Aufnahme des Anschlussadapters 3 und ein Einlegen des erweiterten Abschnitts 12, 22 des Anschlussstückes 10 ,20 in eine Ausnehmung 31, 32, die den erweiterten Abschnitt 12, 22 untergreift.

Alternativ zum dargestellten Ausführungsbeispiel der erfindungsgemäßen Verbindung kann eine einzelne oder mehrere, insbesondere bis zu vier erfindungsgemäße Verbindungen zu einer Baueinheit zusammengefasst sein. Der Anschlussadapter 3 kann anders als im dargestellten Ausführungsbeispiel eine andere Grundform als eine runde Grundform haben, beipsielsweise eine ellipsoide oder mehreckige, wobei eine oder mehrere erfindungsgemäße Verbindungen in beliebiger Anordnung geschaffen werden können. Denkbar ist auch eine rechteckige Grundform des Anschlussadapters 3, bei dem mehrere erfindungsgemäße Verbindungen nebeneinander an einer Seite des Rechtecks angeordnet sind.

## Patentansprüche

1. Formschlüssige Verbindung des Anschlußstücks (10, 20) einer Rohr- oder Schlauchleitung (1, 2) für Fluide mit einem Anschlußadapter (3), insbesondere einer Frischwasserzuleitung einer Sanitärmischarmatur, wobei das Anschlussstück (10, 20) eine Bohrung des Anschlussadapters (3) durchragt und wobei das obere Anschlußstück (10, 20) der Rohr- oder Schlauchleitung (1, 2) an seinem anzuschließenden Ende einen nach außen erweiterten Abschnitt (12, 22) aufweist, der in einer Ausnehmung (31,32) des Anschlußadapters (3) einliegt, die den erweiterten Abschnitt (12, 22) untergreift, **dadurch gekennzeichnet, dass** die Bohrung des Anschlußadpaters (3) zu einer maulförmigen Aufnahme ausgebildet ist und das Anschlußstück (10, 20) der Rohr- oder Schlauchleitung (1, 2) durch seitliches Einschieben in den Anschlußadapter (3) montierbar ist.

2. Formschlüssige Verbindung nach Anspruch 1, **dadurch gekennzeichnet, dass** die Breite der maulförmigen Aufnahme dem Durchmesser der Bohrung entspricht, so dass die durch die Ausnehmung (31, 32) gebildete Anlageschulter einen Umfangsbereich der Rohr- oder Schlauchleitung (1, 2) von mehr als 180° umfasst.

3. Formschlüssige Verbindung nach Anspruch 1 oder 2, **dadurch gekennzeichnet, dass** der nach außen erweiterte Abschnitt (12, 22) ringförmig ausgebildet ist.

4. Formschlüssige Verbindung nach einem der vorherigen Ansprüche, **dadurch gekennzeichnet, dass** die Oberseite des nach außen erweiterten Abschnitts (12, 22) eine ringförmige Stufe (13, 23) bildet.

5. Fomischlüssige Verbindung nach einem der vorherigen Ansprüche, **dadurch gekennzeichnet, dass** das Anschlußstück (10, 20) unterhalb des erweiterten Abschnitts (12, 22) einen geringeren Durchmesser aufweist als die darunter liegende Rohr- oder Schlauchleitung (1, 2), so dass zwischen der Rohr- oder Schlauchleitung (1, 2) und dem nach außen erweiterten Abschnitt (12, 22) des Anschlußstücks eine Einschnürung (14, 24) besteht.

6. Formschlüssige Verbindung nach Anspruch 5, **dadurch gekennzeichnet, dass** der Bereich geringeren Durchmessers (14, 24) des Anschlußstücks (10, 20) die Bohrung des Anschlußadapters (3) durchragt.

7. Formschlüssige Verbindung nach einem der vorherigen Ansprüche, **dadurch gekennzeichnet, dass** der nach außen erweiterte Abschnitt (12, 22) des Anschlußstücks (10, 20) in einer durch eine Ausnehmung (31, 32) des Anschlußadapters (3) gebildete Anlageschulter formschlüssig einliegt.

8. Formschlüssige Verbindung nach einem der vorherigen Ansprüche, **dadurch gekennzeichnet, dass** am Anschlußadapter (3) zwei oder mehr Anschlußstücke (10, 20) befestigbar sind.

## Claims

1. A positive-locking connection of the connecting piece (10, 20) of a pipe or conduit (1, 2) for fluids to a connecting adapter (3), particularly a freshwater supply pipe of a sanitary mixer tap or fitting, the connecting piece (10, 20) projecting through a hole in the connecting adapter (3) and the upper connecting piece (10, 20) of the pipe or conduit (1, 2) having at the end to be connected an outwardly wider portion (12, 22) which is located in a recess (31, 32) in the connecting adapter (3), said recess engaging underneath the wider portion (12, 22), **characterized in that** the hole in the connecting adapter (3) is made to form a mouth-like seat and the connecting piece (10, 20) of the pipe or conduit (1, 2) can be fitted by sliding it from the side into the connecting adapter (3).

2. A positive-locking connection according to Claim 1, **characterized in that** the width of the mouth-like seat corresponds to the diameter of the hole, so that the supporting shoulder formed by the recess (31, 32) embraces a peripheral portion of the pipe or conduit (1, 2) of more than 180°.

3. A positive-locking connection according to Claim 1 or 2, **characterized in that** the outwardly wider portion (12, 22) is annular in form.

4. A positive-locking connection according to one of the preceding claims, **characterized in that** the upper side of the outwardly wider portion (12, 22) forms an annular step (13, 23).

5. A positive-locking connection according to one of the preceding claims, **characterized in that,** underneath its wider portion (12, 22), the connecting piece (10, 20) has a smaller diameter than the pipe or conduit (1, 2) located beneath it, so that between the pipe or conduit (1, 2) and the outwardly wider portion (12, 22) of the connecting piece there is a necked portion (14, 24).

6. A positive-locking connection according to Claim 5, **characterized in that** the portion of the connecting piece (10, 20) which has the smaller diameter (14, 24) projects through the hole in the connecting adapter (3).

7. A positive-locking connection according to one of the preceding claims, **characterized in that** the outwardly wider portion (12, 22) of the connecting piece (10, 20) is positively located on a supporting shoulder formed by a recess (31, 32) in the connecting adapter (3).

8. A positive-locking connection according to one of the preceding claims, **characterized in that** two or more connecting pieces (10, 20) can be fixed to the connecting adapter (3).

## Revendications

1. Raccordement par correspondance de forme du raccord (10, 20) d'un conduit rigide ou flexible (1, 2) pour fluides comprenant un adaptateur de raccordement (3), en particulier d'une conduite d'arrivée d'eau fraîche d'un mélangeur sanitaire, le raccord (10, 20) pénétrant au travers d'un alésage de l'adaptateur de raccordement (3) et le raccord supérieur (10, 20) du conduit rigide ou flexible (1, 2) présentant à son extrémité à raccorder une section (12, 22) élargie vers l'extérieur qui s'insère dans un évidement (31, 32) de l'adaptateur de raccordement (3) qui enclave la section élargie (12, 22), **caractérisé en ce que** l'alésage de l'adaptateur de raccordement (3) est réalisé en un logement en forme de mâchoire et que le raccord (10, 20) du conduit rigide ou flexible (1, 2) peut être monté par introduction latérale dans l'adaptateur de raccordement (3).

2. Raccordement par correspondance de forme suivant la revendication 1, **caractérisé en ce que** la largeur du logement en forme de mâchoire correspond au diamètre de l'alésage, de sorte que l'épaulement d'appui formé par l'évidement (31, 32) entoure une zone périphérique du conduit rigide ou flexible (1, 2) de plus de 180°.

3. Raccordement par correspondance de forme suivant l'une des revendications 1 et 2, **caractérisé en ce que** la section (12, 22) élargie vers l'extérieur a une configuration annulaire.

4. Raccordement par correspondance de forme suivant l'une des revendications précédentes, **caractérisé en ce que** le côté supérieur de la section (12, 22) élargie vers l'extérieur forme un échelon annulaire (13, 23).

5. Raccordement par correspondance de forme suivant l'une des revendications précédentes, **caractérisé en ce que** le raccord (10, 20) présente au-dessous de la section élargie (12, 22) un diamètre plus faible que le conduit rigide ou flexible (1, 2) sous-jacent, de sorte qu'un rétrécissement (14, 24) existe entre le conduit rigide ou flexible (1, 2) et la section (12, 22) élargie vers l'extérieur du raccord.

6. Raccordement par correspondance de forme suivant la revendication 5, **caractérisé en ce que** la zone de diamètre plus faible (14, 24) du raccord (10, 20) pénètre au travers de l'alésage de l'adaptateur de raccordement (3).

7. Raccordement par correspondance de forme suivant l'une des revendications précédentes, **caractérisé en ce que** la section (12, 22) du raccord (10, 20) élargie vers l'extérieur s'insère par correspondance de forme dans un épaulement d'appui formé par un évidement (31, 32) de l'adaptateur de raccordement (3).

8. Raccordement par correspondance de forme suivant l'une des revendications précédentes, **caractérisé en ce que** deux raccords (10, 20) ou plus peuvent être fixés sur l'adaptateur de raccordement (3).
